# EUROPEAN PATENT SPECIFICATION

(11) **EP 1 202 476 B1**
(45) Date of publication and mention of the grant of the patent: **30.08.2006**
(21) Application number: 00440289.7
(22) Date of filing: 27.10.2000
(51) Int. Cl.: H04B 10/155

(54) **System and transmitter for transmitting optical data**
System und Vorrichtung zum Senden von optischen Daten
Système et émetteur pour la transmission de données optiques

(43) Date of publication of application: 02.05.2002
(73) Proprietor: ALCATEL, 75008 Paris (FR)
(72) Inventor: Bissessur, Hans, 75014 Paris (FR); Penninckx, Denis, 91620 Nozay (FR)
(74) Representative: Rausch, Gabriele

(56) References cited:
- EP-A- 0 973 277
- EP-A- 0 975 107
- EP-A- 1 024 541

## Description

The invention relates to the field of transmitting digital data by optical means. It is more particularly concerned with transmission at high bit rates on long-haul fiber optic links using a PSBT (Phase Shaped binary Transmission) modulation scheme and a transmitter that can modulate the data in a optimal form.

### BACKGROUND OF THE INVENTION

Such transmission uses an optical transmitter connected to an optical receiver by the fiber. The transmitter generally modulates the power of an optical carrier wave from a laser oscillator as a function of the information to be transmitted. NRZ or RZ modulation is very frequently used and entails varying the power of the carrier wave between two levels: a low level corresponding to extinction of the wave and a high level corresponding to a maximum optical power. The variations of level are triggered at times imposed by a clock rate and this defines successive time cells allocated to the binary data to be transmitted. By convention, the low and high levels respectively represent the binary values "0" and "1"

EP 09730277 discloses a transmitter for RZ or NRZ signals with a direct modulated laser source. The laser source must be stabilized and wavelength locked. With an optical filter the drawbacks of a direct modulated source are limited.

The maximum transmission distance is generally limited by the ability of receivers to detect without error these two power levels after the modulated wove has propagated in the optical link. The usual way to increase this distance is to increase the ratio between the average optical power of the high levels and that of the low levels, this ratio defining the "extinction ratio" which is one of the characteristics of the modulation.

For a given distance and a given extinction ratio, the information bit rate is limited by chromatic dispersion generated in the fibers. This dispersion results from the effective index of the fiber depending on the wavelength of the wave transported, and it has the consequence that the width of the transmitted pulses increases as they propagate along the fiber.

This phenomenon is characterized by the dispersion coefficient D of the fiber, which is defined as a function of the propagation constant β by the equation D = -(2πc/λ²)d²β/dω², where λ and ω are respectively the wavelength and the angular frequency of the wave. The value and sign of the dispersion coefficient D depend on the type of fiber and the transmission wavelength. For example, for the "standard" monomode fibers routinely used, and for λ = 1.55 µm, the coefficient D is positive and has a value of 17 ps/(nm.km). In contrast, the coefficient D is zero λ = 1.30 µm. The coefficient D can generally be positive, zero or negative depending on the wavelength and the type of fiber used.

If the coefficient D has a non-zero value, to compensate the phenomenon of pulse widening in the case of NRZ or RZ modulation, it has already been proposed to modulate the phase ϕ (and therefore the frequency or the angular frequency) of the carrier wave in a manner that correlates to the modulation of the power. The phase ϕ corresponds to the convention whereby the electric field of the carrier wave is represented as a function of time t by a complex expression of the type: Ap exp (jωₒt) and the field of a transmitted wave S of amplitude A is represented by: S = A exp [i(ωₒt+ϕ)], where ωₒ is the angular frequency of the carrier wave and ϕ is the phase of the transmitted wave.

To be more precise, to compensate chromatic dispersion, and if the coefficient D is positive, the phase must decrease on the rising edges of the pulses and increase on their falling edges. The modulated wave is then said to feature a transient negative "chirp". If, in contrast, the coefficient D is negative, the phase modulation must be reversed and the transient "chirp" is positive.

A transient "chirp" parameter α is introduced to characterize this modulation, and is defined by the equation α = 2P(dϕ/dt)/(dP/dt), where P is the power of the modulated wave and ϕ is its phase in radians.

For the previously mentioned standard fibers and for values λ close to 1.55 µm, for example, the value of the parameter α must be constant and substantially equal to -1 if by approximation α is regarded as constant.

Another approach proposes to reduce the bandwidth of the signal to be transmitted by appropriate encoding. One particular proposal is to use the "duobinary" code which is well-known in the field of electrical transmission. This code has the property of halving the bandwidth of the signal. According to the standard definition of this code, a signal is used with three levels respectively symbolized by 0, + and -. The binary value 0 is encoded by the level 0 and the value 1 is encoded either by the level + or by the level - with an encoding rule whereby the levels encoding two successive blocks of "1" around a respectively even or odd number of successive "0" are respectively identical or different.

Using the duobinary code for optical transmission is mentioned in the article "10 Gbit/s unrepeatered three-level optical transmission over 100 km of standard fiber", X.Gu *et al.,* ELECTRONICS LETTERS, 9 December 1993, Vol.29, No.25. According to the above article, the three levels 0, +, - respectively correspond to three levels of optical power.

The Us Patent 5 867 534 also describes application of duobinary encoding to the optical field. In the above document, binary "0" always corresponds to a low level of the optical power and the symbols + and - correspond to the same high optical power level and are distinguished by a 180° phase-shift of the optical carrier.

The use of that phase inverting duobinary code is also mentioned in the article "Optical duobinary transmission system with no receiver sensitivity degradation", K, Yonenaga *et al*., ELECTRONICS LETTERS, 16 February 1995, Vol.31, No.4.

In simulations and tests in which the experimental parameters were varied, it was found that an improvement is obtained provided that a phase shift of the carrier wave occurs within each "0" which precedes or succeeds each block of "1" or each isolated "1". The absolute value of the phase shift can be approximately 180°. Also, the average optical power of the low levels which encode "0" must have a value relative to that of the high levels sufficient to create intersymbol interference favorable to compensating chromatic dispersion. This amounts to saying that the extinction ratio must have a finite value.

The above observations have lead to the definition of a new optical transmission method known as Phase-Shaped Binary Transmission (PSBT). This method is described in European Patent Application EP-A-0 792 036 (Application No. 97400345.1), for example.

The PSBT process requires a transmitter capable of applying an absolute phase shift in the order of 180° to the carrier wave within each cell that corresponds to logic "0" and which precedes or succeeds any cell containing a logic "1".

A solution using a laser oscillator coupled to an electro-optical power modulator in turn coupled to an electro-optical phase modulator, for example, has the drawback of requiring complex and costly electronic control.

In reality, it is not at all inconvenient for the phase shifts to be effected systematically in each cell containing a logic "0". This leads to a simpler implementation using a "Mach-Zehnder" interferometer modulator. A modulator of this kind comprises an interferometer structure with an input optical guide that splits into two branches that are combined to form an output guide. Electrodes apply respective electric fields to the two branches. When the input optical guide receives a carrier wave of constant power, two partial waves propagate in the two branches and then interfere at the output. The output guide then supplies a wave whose power and phase depend on the values of the electrical control voltages applied to the electrodes. Phase shifts of approximately 180° can be produced at the times when the instantaneous power of the transmitted wave is zero.

To satisfy the conditions for PSBT modulation, the electrical control system must firstly feature amplitude modulation at three main levels as a function of the signal to be sent, in accordance with the duobinary code. It must also feature sustained oscillation at a low amplitude during consecutive sequences of "0". The electrodes must therefore be biased so that in the absence of modulation the DC components of the applied electrical voltages are such that the interference of the two partial waves is as destructive as possible.

If the modulated control signal is applied to only one of the electrodes and the other electrode receives a fixed bias voltage, the optical signal output by the modulator features a non-zero transient "chirp" which can be positive or negative, depending on the sequence of binary data encountered and whether the edge is a rising or falling edge.

One solution to the problem of eliminating that uncontrolled transient "chirp" is to use "push-pull" control applying a modulated voltage to one of the electrodes, as previously indicated, and a modulated voltage with the opposite phase to the other electrode.

Tests on standard fibers have shown that PSBT modulation achieves transmission distances much greater than those that can be attained with NRZ or RZ modulation. For example, a 10 Gbit/s signal can be transmitted 240 km, although the limit with NRZ modulation is only around 70 km.

However, implementations of PSBT modulators, especially those with an interferometer structure as mentioned above, do not always guarantee optimum transmission quality, regardless of their operating conditions.

For example, long-haul transoceanic transmission optical links include many amplifiers. The noise generated by the amplifiers then seriously degrades the extinction ratio. It is then useful to be able to adjust the extinction ratio at the transmitter end to give it an optimum value, i.e. a value high enough to allow for the amplifiers but low enough for intersymbol interference to compensate widening of the pulses due in particular to chromatic dispersion. An adjustment of this kind is difficult to implement in the control function of PSBT modulators, however.

Studies have shown that with PSBT modulation transmission distances can be increased by introducing a transient "chirp" whose sign and optimum value depend in particular on the dispersion coefficient D of the fiber, on the required transmission distance, and on non-linear effects (Kerr effect). As previously mentioned, the interferometer modulator solution cannot readily impose a transient "chirp" of given sign and value.

In the publication EP-A-0975107 it is proposed a transmission system which is more flexible to use and which is easier to optimize for each type of optical link and for each transmission distance.

The transmission system includes a first electro-optical modulator adapted to supply in response to an input electrical signal a controlled phase optical signal having an optical power modulated between low levels and high levels and a phase shift within each time cell that contains a low power level. To make it more flexible to use, the system includes a second electro-optical modulator controlled by the input signal and optically coupled to the first electro-optical modulator to apply to said controlled phase optical signal complementary power and/or phase modulation so as respectively to modify its extinction ratio and/or to apply a transient "chirp" to it.

This kind of structure requires a synchronous driving of the two modulators. The modulation must be established channel by channels which increases the number of expensive components.

The invention allows a good resistance to chromatic dispersion and to noise. The eye opening of the signals transmitted with the inventional arrangement is improved in comparison with the basic PSBT modulation scheme. The eye opening of the inventional PSBT modulation scheme and the extinction ration is increased by about 3 dB.

### DRAWINGS

Figure 1 shows an schematic structure of transmitter
Figure 2 shows the spectrum of the PSBT
Figure 3 shows the resulting eye opening
Figure 4 shows the variation of Q
Figure 5 a bit error rate diagram
Figure 6 WDM structure.

### DESCRIPTION OF THE INVENTION

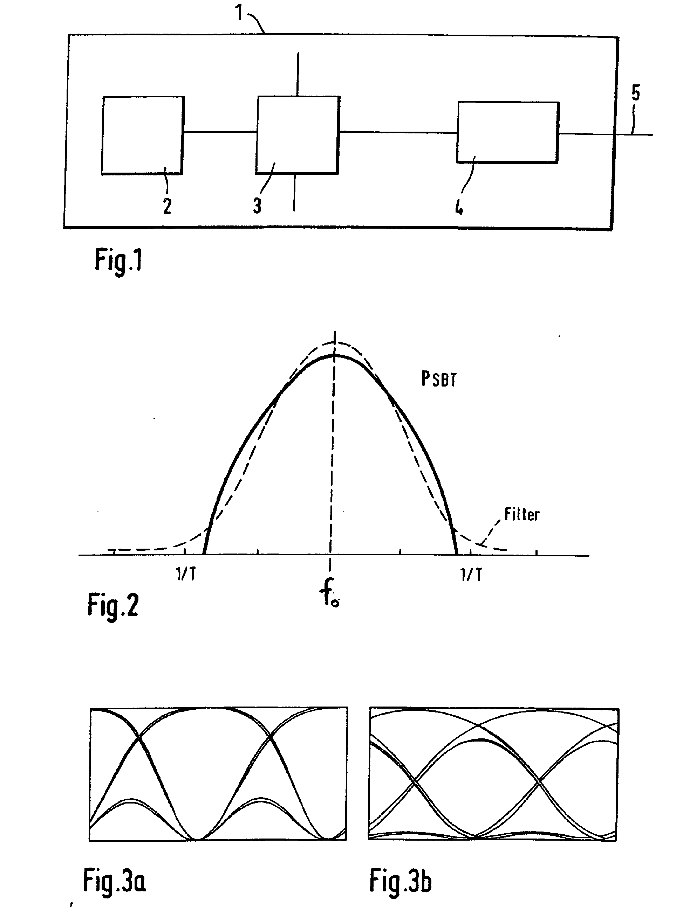

Figure 1 shows a transmitter for optical signals. The transmitter includes a laser 2 , the output of the laser 2 is connected to a modulator 3. The output of the modulator 3 is fed to the input of an optical filter 4. The output of the optical filter 4 is connected to the transmission line 5.

The cw signal of the laser 2 is modulated by the modulator 3. This modulator can be realized as an electro absorption modulator or a Mach-Zehnder modulator. The modulator is in detail described in the application EP-A-0 792 036.

After modulating the signal the optical signal is limited by a band pass filter 4. As shown in figure 2 the band pass filter is centered in fₒ which is the carrier wavelength of the signal. The filter shape follows a smooth filter curve. This can be realized either by a Gaussian shape of the filter or a sin² filter curve or any other filter shape that con be used for a narrow band pass filter. As one embodiment of the invention a rectangular filter shape as realized by a fiber Bragg grating is used.

Figure 3 shows the advantages of a limited filtering of the optical signal. 3a) shows the eye diagram of a PSBT signal without any filtering. This diagram shows bounces in the "0" signals which reduces the eye opening and the related Q-factor of the transmission system. Figure 3 b) shows the eye diagram after the optical signal is filtered by a narrow Gaussian filter with a width 1/e= 1.2/T. The bounces are damped dramatically and the eye opening increases .

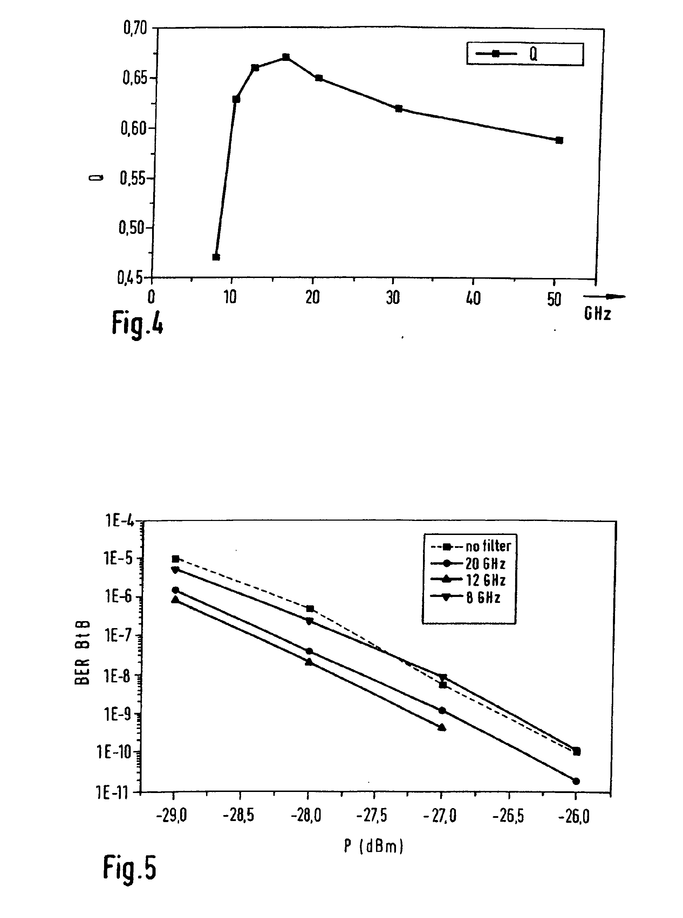

Figure 4 shows the resulting Q-factor over the width of the optical filter in GHz. The Q-factor increases from a value about 0.6 for a broad filter width to a value over 0.7 by decreasing the width of the optical filter. So in contradiction to the prejudice of persons skilled in art the quality of the signal can be improved by a narrowing of the bandpass filter. The narrowing is for sure limited and it can be derived from Fig. 4 that for very narrow filter widths the quality decreases dramatically. An optimum quality can be achieved by using a filter width of 0.8/T to 1.8/T where T is the bit period time.

Figure 5 shows that the bit error rate (BER) over the power of the signal. It can also derived from this chart that a optical filter width with 1.2/T improves thee bit error rate behavior of the transmission system.

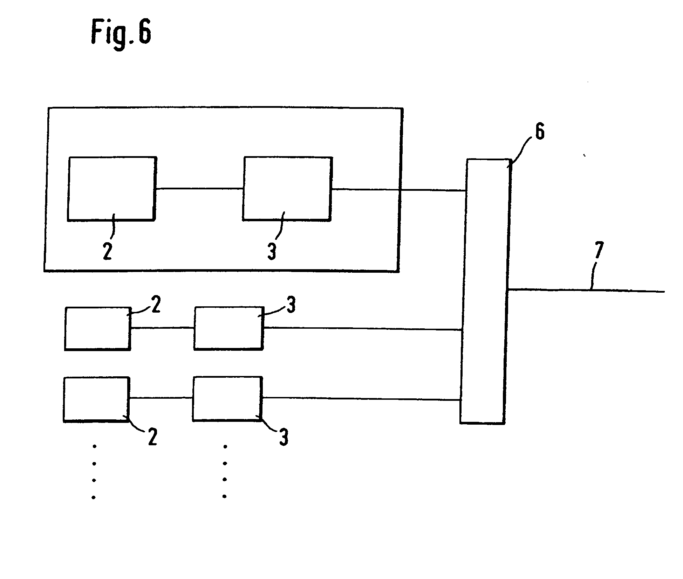

An further embodiment of the invention is described in figure 6. A laser 2 is connected to a modulator 3 for each channels of a wavelength multiplex. Afterwards the single optical signals are multiplexed in a multiplexer 6.

For a WDM transmission system a number optical signals of different wavelengths are grouped in a multiplexer. The multiplexer itself has a natural filtering function realized for example with an arrayed waveguide grating (AWG). The spectral response of a AWG narrows the bandwidth of the modulated signal and is similar to a smooth shaped band pass filter.

So in this embodiment the AWG is used for two functions: to multiplex data in one data stream for transmission and to limit the bandwidth of the single channels by the internal filtering function.

## Claims

1. A system for transmitting an optical signal in the form of an optical carrier wave modulated as a function of an input binary electrical signal, said system including on electro-optical modulator(3) adapted to respond to said input electrical signal by supplying a controlled phase optical signal having optical power modulated between low levels and high levels respectively corresponding to first and second modulation levels of the input signal, and a phase shift within time cells, each time cell contains a low power level and precedes or succeeds a cell that contains a high power level, **characterized in that** the system further comprises an optical narrow band pass filter (4) adapted to filter the modulated signal , where the band pass has a bandwidth between 0.8/T to 2,5/T with T equal to the bit time of the signal.

2. A transmitter (1) for optical signals with a laser (2) and a modulator (3) for modulating the signal by supplying a controlled phase optical signal having optical power modulated between low levels and high levels respectively corresponding to first and second modulation levels of the input signal, and a phase shift within time cells, each time cell contains a low power level and precedes or succeeds a cell that contains a high power level, **characterized** that an optical narrow pass band filter (4) filters the modulated signal and where the band pass has a bandwidth between 0.8/T to 2,5/T with T equal to the bit time of the signal

3. A transmitter (1) according to claim 2 where the band pass filter(4) is centered at the carrier wavelength.

4. A transmitter (1) according to claim 2 where the band pass filter (4) has a Gaussian shape.

5. A transmitter (1) according to claim 2 where the electro-optical modulator includes:
- a "Mach-Zehnder" interferometer structure wherein an input optical guide splits into two branches to guide two partial waves, said two branches combining again to form an output guide, respective electrodes being provided to apply electrical fields to said two branches, and
- a control circuit for applying to the electrodes respective control voltages having DC components between modulation components in phase opposition, said DC components being such that in the absence of modulation components said partial waves interfere destructively.

6. A transmitter (1) for a WDM system the transmitter comprising a laser (2) for outputting an optical signal" a modulator (3), for modulating the signal by supplying a controlled phase optical signal having optical power modulated between low levels and high levels respectively corresponding to first and second modulation levels of an input signal, and a phase shift within time cells, each time cell contains a low power level and precedes or succeeds a cell that contains a high power level and a connection to a multiplexer structure (6), the multiplexer structure (6) having a narrow pass band filtering function for the optical signal and where the band pass has a bandwidth between 0.8/T to 2,5/T with T equal to the bit time of the signal.

## Patentansprüche

1. Ein System zur Übertragung eines optischen Signals in Form einer optischen Trägerwelle, die in Abhängigkeit von einem binären, elektrischen Eingangssignal moduliert wird, wobei das genannte System einen elektrisch-optischen Modulator (3) umfasst, der in der Lage ist, auf das genannte elektrische Eingangssignal zu reagieren, indem er ein phasengesteuertes optisches Signal mit einer optischen Leistung, die zwischen einem unteren Pegel und einem oberen Pegel moduliert wird, die jeweils dem ersten und zweiten Modulationspegel des Eingangssignals entsprechen, sowie eine Phasenverschiebung innerhalb von Zeitfächern liefert, wobei jedes Zeitfach einen unteren Leistungspegel enthält und jedem Fach vorausgeht bzw. nachfolgt, das einen oberen Leistungspegel enthält, **dadurch gekennzeichnet, dass** das System außerdem einen optischen Schmalbandfilter (4) umfasst, der in der Lage ist, das modulierte Signal zu filtern, wobei der Bandpass eine Bandbreite zwischen 0,8/T und 2,5/T aufweist, wobei T das Bitintervall des Signals darstellt.

2. Ein Sender (1) für optische Signale mit einem Laser (2) und einem Modulator (3) zur Modulation des Signals durch Bereitstellung eines phasengesteuerten optischen Signals mit einer optischen Leistung, die zwischen dem unteren Pegel und dem oberen Pegel moduliert werden kann, die jeweils dem ersten und zweiten Modulationspegel des Eingangssignals entsprechen, sowie einer Phasenverschiebung innerhalb von Zeitfächern, wobei jedes Zeitfach einen unteren Leistungspegel enthält und einem Zeitfach vorausgeht bzw. diesem nachfolgt, das einen oberen Leistungspegel enthält, **dadurch gekennzeichnet, dass** ein optischer Schmalbandpassfilter (4) das modulierte Signals filtert und wobei der Bandpass eine Bandbreite zwischen 0,8/T und 2,5/T aufweist, wobei T das Bitintervall des Signals darstellt.

3. Ein Sender (1) gemäß Anspruch 2, wobei die Mittenfrequenz des Bandpassfilters (4) der Trägerwellenlänge entspricht.

4. Ein Sender (1) gemäß Anspruch 2, wobei der Bandpassfilter (4) eine Gaußsche Form aufweist.

5. Ein Sender (1) gemäß Anspruch 2, wobei der elektrisch-optische Modulator Folgendes umfasst:
- eine "Mach-Zehnder"-Interferometarstruktur, wobei ein optischer Eingangswellenleiter in zwei Zweige aufgespalten wird, die zwei Teilwellen übertragen, wobei die beiden genannten Zweige wieder kombiniert werden und einen Ausgangswellenleiter bilden, wobei die jeweiligen Elektroden eingesetzt werden, um elektrische Felder auf die genannten beiden Zweige anzulegen, und
- einen Steuerkreis zum Anlegen der jeweiligen Steuerspannungen der Elektroden, wobei DC-Komponenten zwischen den Modulationskomponenten in umgekehrter Phase vorliegen, wobei die genannten DC-Komponenten so ausgeführt sind, dass sich die genannten Teilwellen beim Fehlen von Modulationskomponenten destruktiv überlagern.

6. Ein Sender (1) für ein WDM-System, wobei der Sender einen Laser (2) zur Ausgabe eines optischen Signals, einen Modulator (3) zur Modulation des Signals durch Anlegen eines phasengesteuerten optischen Signals mit einer optischen Leistung umfasst, die zwischen dem unteren Pegel und dem oberen Pegel moduliert wird, die jeweils dem ersten und zweiten Modulationspegel eines Eingangssignals entsprechen, sowie eine Phasenverschiebung innerhalb von Zeitfächern, wobei jedes Zeitfach einen unteren Leistungspegel enthält und einem Zeitfach vorausgeht oder diesem nachfolgt, das einen oberen Leistungspegel enthält, sowie eine Verbindung zu einer Mulitplexeratruktur (6), wobei die Multiplexerstruktur (6) eine Schmalbandfilterfunktion für das optische Signal aufweist und wobei der Bandpass eine Bandbreite zwischen 0,8/T und 2,5/T aufweist, wobei T das Bitintervall des Signals darstellt.

## Revendications

1. Système pour transmettre un signal optique sous la forme d'une onde porteuse optique modulée en fonction d'un signal électrique binaire d'entrée, ledit système incluant un modulateur électro-optique (3) adapté à répondre audit signal électrique d'entrée en fournissant un signal optique à phase commandée ayant une puissance optique modulée entre des niveaux faibles et des niveaux élevés correspondant respectivement à des premier et second niveaux de modulation du signal d'entrée, et un déphasage dans des cellules temporelles, chaque cellule temporelle contient un niveau de puissance faible et précède ou suit une cellule qui contient un niveau de puissance élevé, **caractérisé en ce que** le système comprend en outre un filtre passe-bande étroit optique (4) adapté pour filtrer le signal modulé, où le passe-bande a une bande passante entre 0,8/T et 2,5/T avec T égal au temps binaire du signal.

2. Emetteur (1) pour des signaux optiques avec un laser (2) et un modulateur (3) pour moduler le signal en fournissant un signal optique à phase contrôlée ayant une puissance optique modulée entre des niveaux faibles et des niveaux élevés correspondant respectivement à des premier et second niveaux de modulation du signal d'entrée, et un déphasage dans des cellules temporelles, chaque cellule temporelle contient un niveau de puissance faible et précède ou suit une cellule qui contient un niveau de puissance élevé, **caractérisé en ce qu'**un filtre passe-bande étroit optique (4) filtre le signal modulé et où le passe-bande a une bande passante entre 0,8/T et 2,5/T avec T égal au temps binaire du signal.

3. Emetteur (1) selon la revendication 2 où le filtre passe-bande (4) est centré au niveau de la longueur d'onde de porteuse.

4. Emetteur (1) selon la revendication 2 où le filtre passe-bande (4) a une forme gaussienne.

5. Emetteur (1) selon la revendication 2 où le modulateur électro-optique inclut :
- une structure d'interféromètre de « Mach-Zehnder » dans laquelle un guide optique d'entrée se sépare en deux branches pour guider deux ondes partielles, lesdites deux branches se combinent de nouveau pour former un guide sortie, des électrodes respectives étant disposées pour appliquer des champs électriques auxdites deux branches, et
- un circuit de commande pour appliquer aux électrodes des tensions de commande respectives ayant des composants DC entre des composants de modulation en opposition de phase, lesdits composants DC étant tels qu'en l'absence de composants de modulation lesdites ondes partielles interfèrent de façon destructrice.

6. Emetteur (1) pour un système WDM, l'émetteur comprenant un laser (2) pour sortir un signal optique, un modulateur (3) pour moduler le signal en fournissant un signal optique à phase commandée ayant une puissance optique modulée entre des niveaux faibles et des niveaux élevés correspondant respectivement à des premier et second niveaux de modulation d'un signal d'entrée, et un déphasage dans des cellules temporelles, chaque cellule temporelle contient un niveau de puissance faible et précède ou suit une cellule qui contient un niveau de puissance élevé, et une connexion sur une structure de multiplexeur (6), la structure de multiplexeur (6) ayant une fonction de filtrage de passe-bande étroit pour le signal optique et où le passe-bande a une bande passante entre 0,8/T et 2,5/T avec T égal au temps binaire du signal.
